# EUROPEAN PATENT APPLICATION

(11) **EP 4 242 859 A1**
(43) Date of publication of application: **13.09.2023**
(21) Application number: 23158764.3
(22) Date of filing: 27.02.2023
(51) Int. Cl.: G06F 13/42, G06F 9/50, G06F 12/02

(54) **SINGLE INTERFACE-DRIVEN DYNAMIC MEMORY/STORAGE CAPACITY EXPANDER FOR LARGE MEMORY RESOURCE POOLING**

(30) Priority: 10.03.2022 US 202263318532 P; 02.08.2022 US 202217879470
(71) Applicant: Samsung Electronics Co., Ltd., Suwon-si, Gyeonggi-do 16677 (KR)
(72) Inventor: CHOI, Byung Hee, San Jose, CA 95134 (US); CHOI, Changho, San Jose, CA 95134 (US)
(74) Representative: Kuhnen & Wacker Patent- und Rechtsanwaltsbüro PartG mbB

(57) **Abstract**

Disclosed is a device including a host, a processor, a memory pooling device electrically connected to the processor, and a compute express link (CXL) dynamic memory capacity expansion device (DMCED), wherein the CXL DMCED is directly electrically connected to the memory pooling device and at least one of a memory capacity or a storage capacity in the memory pooling device is configured to be increased and decreased while maintaining an active power state of the device.

## Description

### FIELD

The disclosure relates generally to data storage, and more particularly, to a dynamic memory expansion capable device for a memory pool as well as a memory plus storage pool.

### BACKGROUND

A double data rate (DDR)-based memory expansion in a server depends on a system power cycle and does not enable dynamic memory expansion. In other words, the system power is turned off, memory is added, and then the system is turned back on in order for memory to be expanded.

In particular, high-performance computing (HPC) and futuristic data center (DC) environments are highly likely to obtain such capability to leverage big data workloads, such as artificial intelligence (AI) or database (DB) big data analytics.

A new technology known as compute express link (CXL) has been introduced, and a large-scale memory/storage pool as a far memory/storage pool may be created, excluding a DDR basis.

HPC and futuristic DC workloads for AI/big data analytics from fifth generation (5G)/Internet of things (IoT)/self-driving cars/edge computing require large memory resource pools that have the capability for dynamic memory expansion in order to accelerate processing large data sets (e.g., in-memory driven processing for AI/DB workloads). However, the current DDR interface-based memory expansion is deficient in dynamic memory expansion capability at least because it requires a power cycle.

In addition, the CXL interface has been introduced as a method of memory expansion, but an effective memory pooling solution has not been achieved to this point.

In particular, it may be difficult to provide dynamic capacity expansion for DDR technology. In addition, peripheral component interconnect express (PCIe) may be used to achieve a successful storage pooling solution.

Futuristic DC workloads may require a large memory/storage data cache for acceleration (e.g., Al/big data analytics) while traditional methods of memory expansion were based on a DDR interface. DDR interface-based memory expansion has faced a breaking point, and as an alternative solution, CXL has been introduced with serial interface-based memory expansion.

HPC and futuristic DC industries have been limited in terms of memory resource expansion in modular, flexible and composable manners. The industry has been providing solutions for dynamic storage expansion in data storage areas, such as non-volatile memory express (NVMe) and solid state drive (SSD). Memory usage, unlike storage, faces a limitation in terms of dynamic expansion memory capacity. The CXL serial interface technology provides a possible solution for overcoming the limitation but has been limited in doing so to this point.

Therefore, there is a need in the art for a CXL interface-based memory expansion solution which increases memory capacity in a device or server without the need for power cycling the device or server.

### SUMMARY

The present disclosure has been made to address at least the above-mentioned problems and/or disadvantages and to provide at least the advantages described below.

Accordingly, an aspect of the present disclosure is to provide dynamic capacity expansion capability for memory only and memory plus storage pooling.

Another aspect of the disclosure is to provide a new mechanism for dynamic memory expansion beyond a system boot up with arbitrary system memory size.

Another aspect of the disclosure is to provide a method and apparatus that address memory usage limitations and re-design memory usage models for HPC and futuristic DC business, such as core/edge DC based on large scale memory/memory plus storage resource pools.

Another aspect of the disclosure is to provide, through the utilization of recent technology such as CXL, both memory and storage with a profound dynamic capacity expansion capability without power cycling, i.e., while maintaining an active power state.

Another aspect of the disclosure is to provide effective manners to scale up/out memory/storage pools and offer new features and DC business opportunities for disaggregated memory/storage pooling based on modular, flexible, and composable methods.

In accordance with an aspect of the disclosure, a device includes a host, a processor, a memory pooling device electrically connected to the processor, and a compute express link (CXL) dynamic memory capacity expansion device (DMCED), wherein the CXL DMCED is directly electrically connected to the memory pooling device.

In accordance with an aspect of the disclosure, a communication method between a host agent and a target agent includes initiating, by the host agent, an add capacity function, updating, by the target agent, a configuration between the host agent and the target agent, sending, by the target agent, the updated configuration to the host agent, performing a dynamic memory capacity expansion process between the host agent and the target agent, and performing a confirmation process between the host agent and the target agent, the confirmation process including an add_complete and/or a release_complete communication.

In accordance with an aspect of the disclosure, a communication method between a host agent and a target agent connected by a switching fabric (SF) disposed between the host agent and the target agent, includes initiating, by the host agent, an add capacity function, transmitting, by a host-managed device memory (HDM) decoder disposed in the SF, an updated configuration to the target agent, sending, by the target agent, the updated configuration to the host agent, performing a dynamic memory capacity expansion process between the host agent and the target agent, and performing a confirmation process between the host agent and the target agent, the confirmation process including an add_complete and/or a release_complete communication.

### BRIEF DESCRIPTION OF THE DRAWINGS

The above and other aspects, features, and advantages of certain embodiment of the present disclosure will be more apparent from the following detailed description taken in conjunction with the accompanying drawings, in which:
FIG. 1 illustrates architectures 100 for a dynamic memory capacity expansion device (DMCED) according to an embodiment;
FIG. 2 illustrates a detailed architecture 200 of the host 120 connection to the DMCED 105 in FIG. 1, according to an embodiment;
FIG. 3 illustrates a detailed architecture 300 of the host 130 connection to the DMCED 105 in FIG. 1, according to an embodiment;
FIG. 4 illustrates a dynamic memory expansion device 400 including device attach/detach and add/release capacity without SF, according to an embodiment;
FIG. 5 illustrates a dynamic memory expansion device 500 including device attach/detach and add/release capacity with SF, according to an embodiment;
FIG. 6 illustrates a dynamic memory plus storage expansion device 600 including device attach/detach and add/release capacity without SF, according to an embodiment;
FIG. 7 illustrates a dynamic memory plus storage expansion device 700 including device attach/detach and add/release capacity with SF, according to an embodiment; and
FIG. 8 is a block diagram of an electronic device in a network environment 800, according to an embodiment.

### DETAILED DESCRIPTION

Embodiments of the present disclosure will be described herein below with reference to the accompanying drawings. However, the embodiments of the disclosure are not limited to the specific embodiments and should be construed as including all modifications, changes, equivalent devices and methods, and/or alternative embodiments of the present disclosure. Descriptions of well-known functions and/or configurations will be omitted for the sake of clarity and conciseness.

The expressions "have," "may have," "include," and "may include" as used herein indicate the presence of corresponding features, such as numerical values, functions, operations, or parts, and do not preclude the presence of additional features. The expressions "A or B," "at least one of A or/and B," or "one or more of A or/and B" as used herein include all possible combinations of items enumerated with them. For example, "A or B," "at least one of A and B," or "at least one of A or B" indicate (1) including at least one A, (2) including at least one B, or (3) including both at least one A and at least one B.

Terms such as "first" and "second" as used herein may modify various elements regardless of an order and/or importance of the corresponding elements, and do not limit the corresponding elements. These terms may be used for the purpose of distinguishing one element from another element. For example, a first user device and a second user device may indicate different user devices regardless of the order or importance. A first element may be referred to as a second element without departing from the scope the disclosure, and similarly, a second element may be referred to as a first element.

When a first element is "operatively or communicatively coupled with/to" or "connected to" another element, such as a second element, the first element may be directly coupled with/to the second element, and there may be an intervening element, such as a third element, between the first and second elements. To the contrary, when the first element is "directly coupled with/to" or "directly connected to" the second element, there is no intervening third element between the first and second elements.

All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the disclosure.

Memory expansion may be performed based on a DDR interface, which is a parallel interface, and may have dynamic capacity expansion limitations.

Some memory device solutions may be non-dynamic capacity expansion driven.

With CXL capability, memory expansion in dynamic and cache coherency features could be embedded on memory/storage pools, in nature. Accordingly, utilizing CXL presents new business models for HPC and futuristic DC areas.

Some the solutions disclosed herein could evolve with computational storage (CS) capability in the future for memory and memory plus storage pooling.

The disclosure provides a memory device which can dynamically expand capacity without a power cycle, and provides a memory plus storage (i.e., MEMOSTORAGE) device which has the same interface as the memory device and can dynamically expand capacity without a power cycle. Additionally, a new business model may be created, particularly for HPC and futuristic DC business where large scale virtual machines (VMs) handle AI/DB big data analytics based on in- memory (IM) centric processing and optimized new features and DC business opportunities for memory resource leveraging with a modular, flexible, and composable manner.

Thus, the disclosure advantageously reduces the physical size, energy cost of datacenters and/or memory, and improves large memory or storage resource pooling requirements for HPC and futuristic DC business.

Memory/(memory plus storage) pooling solutions could be utilized in module, sled, pod, or rack forms. Based on at least some of the solutions provided herein, memory expansion may be executed in an on-the-fly manner (e.g., dynamically, while maintaining an active power state).

This disclosure provides dynamic capacity expansion capability through memory or memory plus storage (i.e., MEMOSTORAGE) devices. Memory/memory plus storage (i.e., MEMOSTORAGE) solutions could be a fundamental technology to address large memory and memory plus storage resource pooling requirements for HPC and futuristic DC business. Also, memory/memory plus storage (i.e., MEMOSTORAGE) resource pooling in HPC and futuristic DC environments may be modular, flexible, and composable for resource management for large workload acceleration.

To enable dynamic memory expansion, the new feature, "over-commitment physical memory space," is created on the host (non-VM or non-Container level) when the system boots up. Eventually, this new feature, "over-commitment physical memory space" will impact VM or Container technologies and will likely be added in the basic input output system (BIOS) and/or operating system (OS) kernel mechanism on the host.

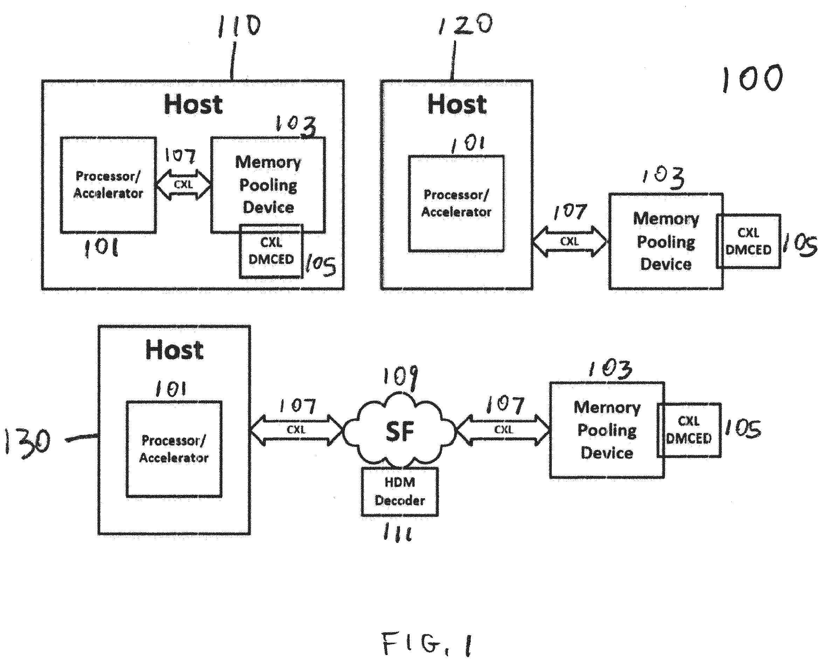

FIG. 1 illustrates architectures 100 for a dynamic memory capacity expansion device (DMCED) according to an embodiment. In FIG. 1, a CXL DMCED 105 is the basic building block for dynamic memory expansion and is a hot-pluggable device for connection to and inclusion with a memory pooling device 103.

As shown in host 110, a processor/accelerator (hereinafter, processor) 101 is connected to the memory pooling device 103 and the CXL DMCED 105 by CXL 107. As shown in host 120, the processor 101 is included in the host 120 but the memory pooling device 103 and CXL DMCED 105 are external to the host 120 and may be connected to the host 120 by a CXL 107. For example, the CXL 107 may be a cable or a CXL extension. As shown in host 130, when there is a large-scale memory pull, a switching fabric (SF) 109 is used to connect the host 130 and the memory pooling device 103 and CXL DMCED 105. Specifically, the host 130 is connected to the SF 109 by a CXL 107 on a first end of the SF 109, and the memory pooling device 103 and CXL DMCED 105 are connected to the SF 109 by another CXL 107 on a second end of the SF 109, opposite to the first end. The SF 109 is decoded by a host-managed device memory (HDM) decoder 111.

Each architecture in FIG. 1 enables memory capacity to change while maintaining an active power state of the DMCED 105, without the need for resetting the device/system by a power cycle.

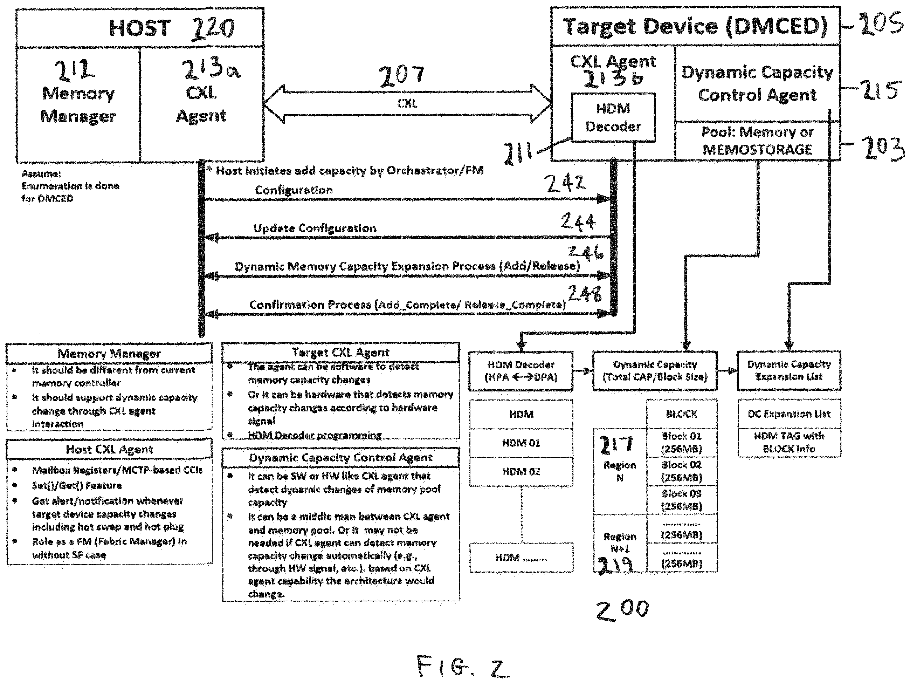

FIG. 2 illustrates a detailed architecture 200 of the host 120 connection to the DMCED 105 in FIG. 1, according to an embodiment. In FIG. 2, each component is identical to the related components shown in the host 120 connection of FIG. 1. The host 220 includes a memory manager 212 and a host CXL agent 213a and is connected to the DMCED 205 (i.e., target device) by a CXL 207. The DMCED 205 includes a target CXL agent 213b which is programmed by being decoded by an HDM decoder 212, and a dynamic capacity control agent 215 to which is connected a memory pooling device 203.

As shown in FIG. 2, the memory pooling device 203 may be a memory only device or a memory plus storage (i.e., MEMOSTORAGE) device.

The memory manager 212 differs from a conventional memory controller in that the memory manager 212 supports dynamic capacity change through the host CXL agent 213a interaction. The host CXL agent 213a mailbox registers management component transport protocol (MCTP)-based component command interfaces (CCIs) and includes a set/get feature in which an alert/notification may be received whenever a target device capacity changes. Such a change may be when a hot swap is performed by a hot plug. The memory manager 212 functions as a fabric manager (FM) in the instance of the host 220 since there is no SF connection to the host 220.

The target CXL agent 213b may be software that detects memory pool 203 capacity changes or hardware that detects such memory pool 203 capacity changes based on a hardware signal.

The dynamic capacity control agent 215 can be a hardware or software device that detects dynamic changes of a memory pool 203 capacity. For example, the dynamic capacity control agent 215 operates as an intermediary between the target CXL agent 213b and the memory pool 203. Alternatively, the dynamic capacity control agent 215 may be omitted when the target CXL agent 213b can automatically detect memory pool 203 capacity changes, such as through a hardware signal, based on the construction of the target CXL agent 213b.

The HDM decoder 212 is used to determine device physical address (DPA) and host physical address (HPA) mappings, i.e., in order for the host 220 to access the memory area in the target 205. There may be n number of HDMs, such as HDM 01, HDM 02,...HDM n. The memory pool 203 includes a dynamic capacity having a memory region N 217 for storing memory blocks (e.g., 256 megabyte (MB)) and a memory region N+1 219 for storing memory blocks combined with storage.

The dynamic capacity control agent 215 includes dynamic capacity expansion list having an HDM TAG with block information related to the memory blocks in memory regions N and N+1 (217, 219).

The communication between the host CXL agent 213a and target CXL agent 213b is as follows. In step 242, the host 220 initiates an "add capacity" function by an orchestrator/FM configuration. In step 244, the target CXL agent 213b updates the configuration and sends the updated configuration to the host CXL agent 213a. In step 246, a dynamic memory capacity expansion process, such as a memory add or release process, is performed between the host CXL agent 213a and the target CXL agent 213b. In step 248, a confirmation process is performed between the host CXL agent 213a and the target CXL agent 213b, including an add_complete and/or a release_complete communication.

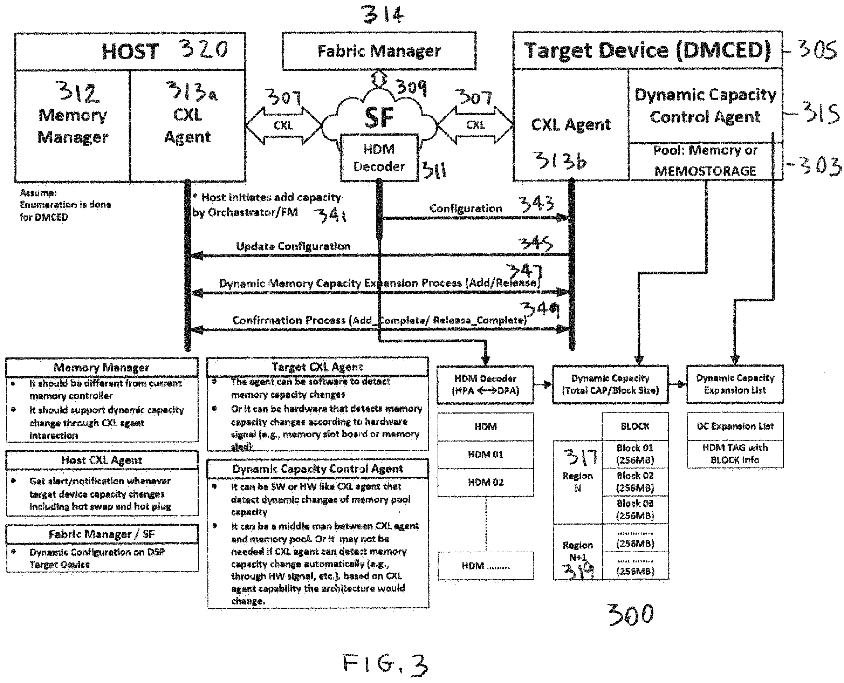

FIG. 3 illustrates a detailed architecture 300 of the host 130 connection to the DMCED 105 in FIG. 1, according to an embodiment. In FIG. 3, each component is identical to the related components shown in the host 130 connection of FIG. 1. The host 320 includes a memory manager 312 and a host CXL agent 313a and is connected to the DMCED 305 (i.e., target device). The difference between FIG. 2 and FIG. 3 is that the host 320 is connected to the DMCED 305 by a fabric manager 314 instead of by a CXL 207 as in FIG. 2.

The fabric manager 314 includes an SF 309 which is connected to the host CXL agent 313a by a CXL on a first end, and to the target CXL agent 313b by a CXL 307 on a second end opposite to the first end. The SF 309 is decoded by an HDM decoder 311, as explained in FIG. 1 with respect to the HDM decoder 111 and in FIG. 2 with respect to the HDM decoder 211. Here, the HDM decoder 311 is in the SF 309; thus, any host entering the SF can access the target 305 based on decoding performed by the HDM decoder 311.

In FIG. 3, the same method between the host and target CXL agents as in FIG. 2 is performed, except that in FIG. 3, the host initiates the add capacity in step 341 on its end, and the configuration is performed in step 343 between the HDM decoder 311 and the target CXL agent 313b.

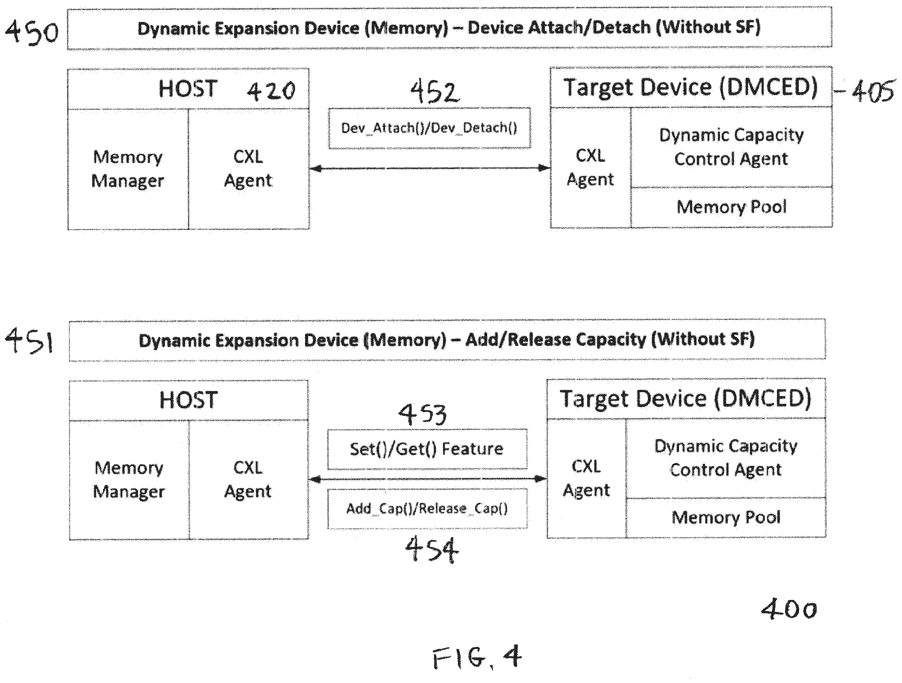

FIG. 4 illustrates a dynamic memory expansion device 400 including device attach/detach and add/release capacity without SF, according to an embodiment.

In FIG. 4, the host 420 and the DMCED 405 connected thereto are identical to the host and DMCED described above in FIGs. 1-3. In the dynamic memory expansion device 400 including device attach/detach 450, a device_attach and/or device_detach communication is performed between the host 420 connected to the target DMCED 405. Based on these communications, a device may be added to or detached from the device 450. In the dynamic memory expansion device 400 including add/release capacity 451, a set/get feature 453 and an add_capacity/release_capacity feature 454 are performed between the host 420 and the target DMCED 405, by which memory capacity may be selectively added or released.

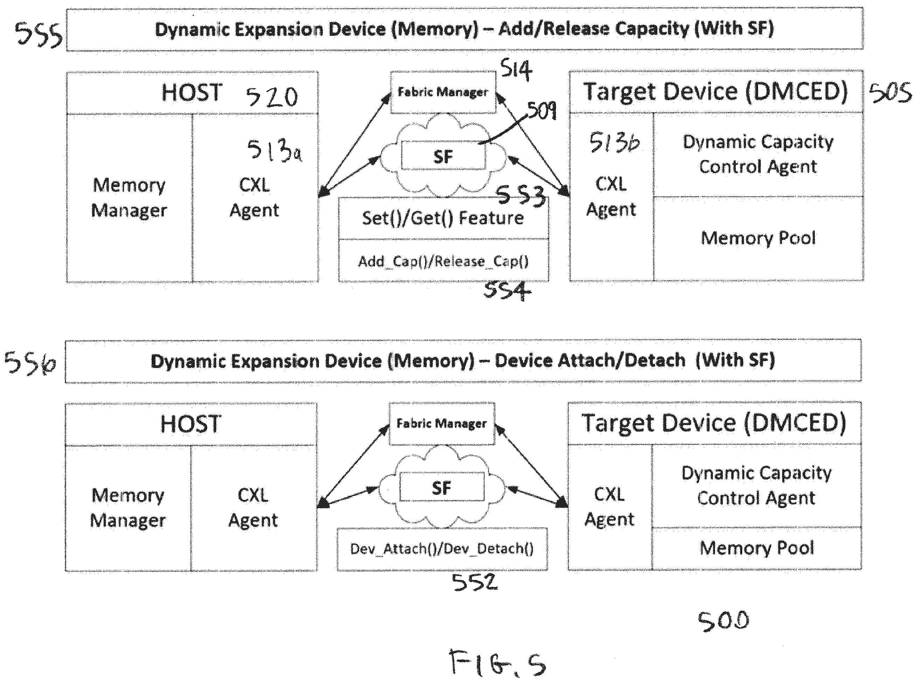

FIG. 5 illustrates a dynamic memory expansion device 500 including device attach/detach and add/release capacity with SF, according to an embodiment.

In FIG. 5, the host 520 and the DMCED 505 connected thereto are identical to the host and DMCED described above in FIGs. 1-3. In the dynamic memory expansion device 500 including device add/release capacity 555, the host CXL agent 513a is connected to the target CXL agent 513b by an FM 514 including an SF 509, in the manner of the FM 314 and the SF 309 described above in FIG. 3.

Based on the communication over each of the FM 514 and the SF 509, a set/get feature 553 and an add_capacity/release_capacity feature 554 are performed between the host CXL agent 513a and target CXL agent 513b. In the dynamic memory expansion device including add/release capacity 555, a set/get feature 553 and an add_capacity/release_capacity feature 554 are performed over the FM 514 and SF 509, by which memory capacity may be selectively added or released. In the dynamic memory expansion device including device attach/detach 556, a device_attach and/or device_detach communication is performed between the host 520 connected to the target DMCED 505 over the FM 514 and SF 509.

In FIGs. 4 and 5, the memory device is based on a CXL interface that provides dynamic composable memory capability in both hardware and software. The memory device has a CXL interface in which a form factor could be card electromechanical (CEM) or cable-based. The memory device has a CXL interface in which a form factor could also be a ball grid array (BGA), in the case of a direct mount on the mother board of the device.

Furthermore, the memory device is a CXL device in which a type of solution could be a dual in-line memory module (DIMM), shared memory, storage, power or discrete network within the rack, SLED or point of delivery (PoD) level. It is noted that the PoD level may be a module of a network, computing, storage, and application components that work together to deliver networking services. The PoD is a repeatable design pattern, and its components maximize the modularity, scalability, and manageability of data centers.

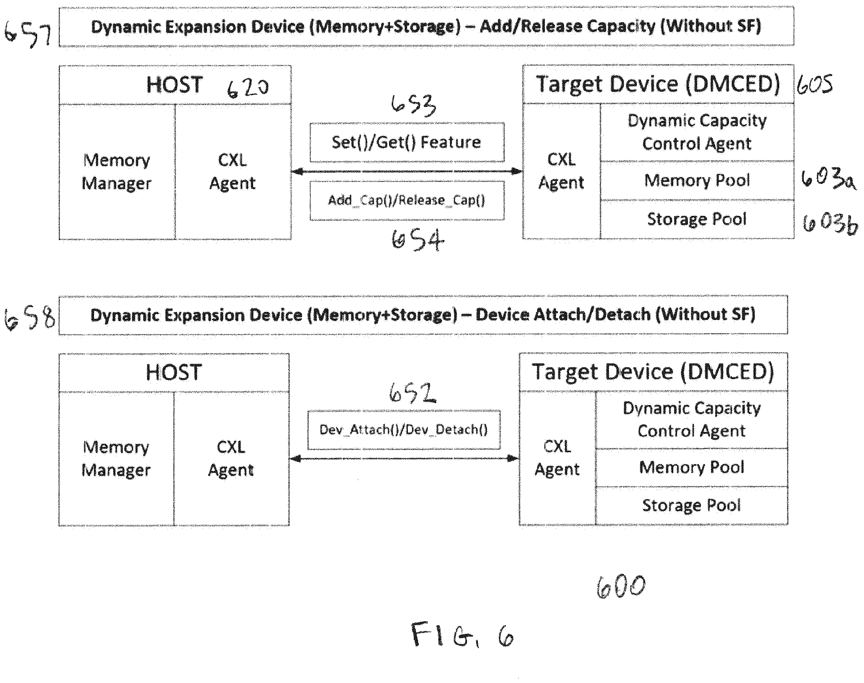

FIG. 6 illustrates a dynamic memory plus storage expansion device 600 including device attach/detach and add/release capacity without SF, according to an embodiment.

In FIG. 6, the host 620 is identical to the host described above in FIGs. 1-3. However, the DMCED 605 in the add/release capacity function 657 and the device attach/detach function 658 in FIG. 6 includes a memory pool 603a and a storage pool 603b. In the dynamic memory expansion device 600 including add/release capacity 657, a set/get feature 653 and an add_capacity/release_capacity feature 654 are performed between the host 620 and the target DMCED 605, by which memory capacity may be selectively added to or released from the memory pool 603a and/or the storage pool 603b.

In the dynamic memory plus storage expansion device 600 including device attach/detach 658, a device_attach and/or device_detach communication 652 is performed between the host 620 connected to the target DMCED 605. Based on these communications, a device may be added to or detached from the device 658.

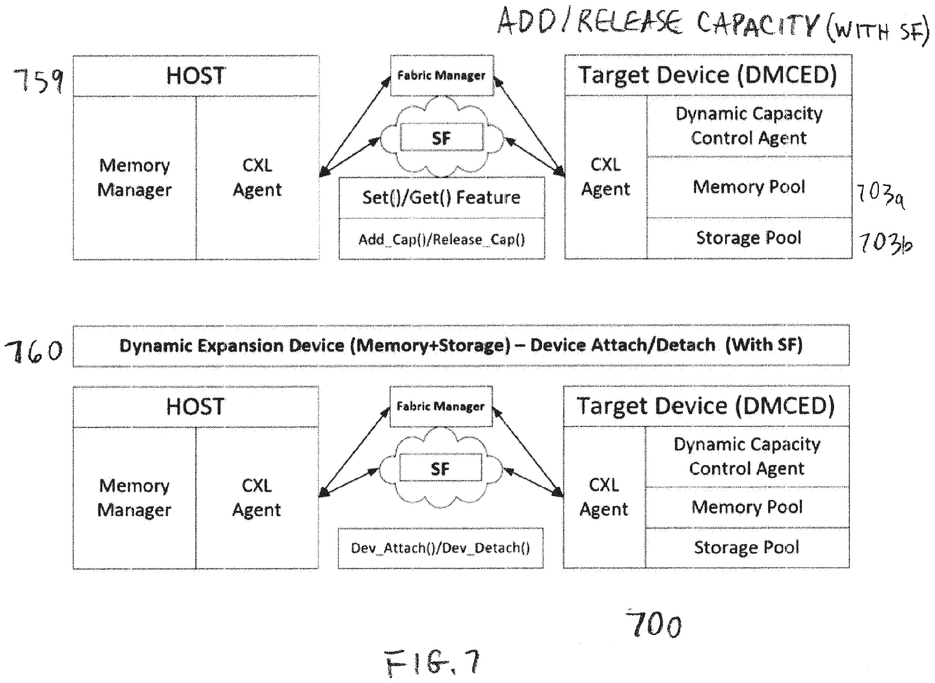

FIG. 7 illustrates a dynamic memory plus storage expansion device 700 including device attach/detach and add/release capacity with SF, according to an embodiment.

In FIG. 7, an identical process is performed at 759 as performed with the device 555 in FIG. 5, except memory is added to or released from the memory pool 703a and storage pool 703b instead of just the memory pool in the DMCED 505 in FIG. 5. Similarly, in the device 760, a similar process is performed in comparison to the device 556 in FIG. 5 except that the DMCED in FIG. 7 includes a memory pool and a storage pool instead of only the memory pool as in FIG. 5.

In the memory plus storage devices in FIGs. 6 and 7, the memory plus storage device is based on a CXL interface that provides dynamic composable memory capability in both hardware and software. The memory plus storage device shares the same CXL interface for both memory and storage. This MEMOSTORAGE provides dynamic composable memory and storage capability. The memory plus storage device has a CXL interface in which a form factor could be CEM or cable-based. In addition, the memory plus storage device has a CXL interface in which a form factor could be BGA, in the case of a direct mount on the mother board. Moreover, the memory plus storage device is a CXL device in which a type of solution could be DIMM only, DIMM+SSD, SLED, PoD and Rack levels.

The disclosure provides the following memory or memory plus storage (i.e., MEMOSTORAGE) solutions.

Based on the devices as described above, a memory oriented distributed computing may be based on HPC and may provide modular, flexible and composable solutions so that a server farm in an HPC environment can create memory pooling in effective manner.

In addition, large memory pooling in HPC environments may be achieved with dynamic expansion capability.

Moreover, futuristic DC seeking RSD oriented DC environments may be created where computing, storage and network resources are disaggregated. Memory resource could be part of the disaggregated architecture for rack scale design (RSD) based DC environments.

As to memory plus storage, modular, flexible and composable solutions may be provided so that the server farm in the HPC environment can create MEMOSTORAGE pooling in an effective manner.

Large MEMOSTORAGE pooling in HPC environments may be provided with dynamic expansion capability. Moreover, futuristic DC seeking RSD oriented DC environments may be provided where computing, storage and network resources are disaggregated. A MEMOSTORAGE resource could be part of the disaggregated architecture for RSD based DC environments.

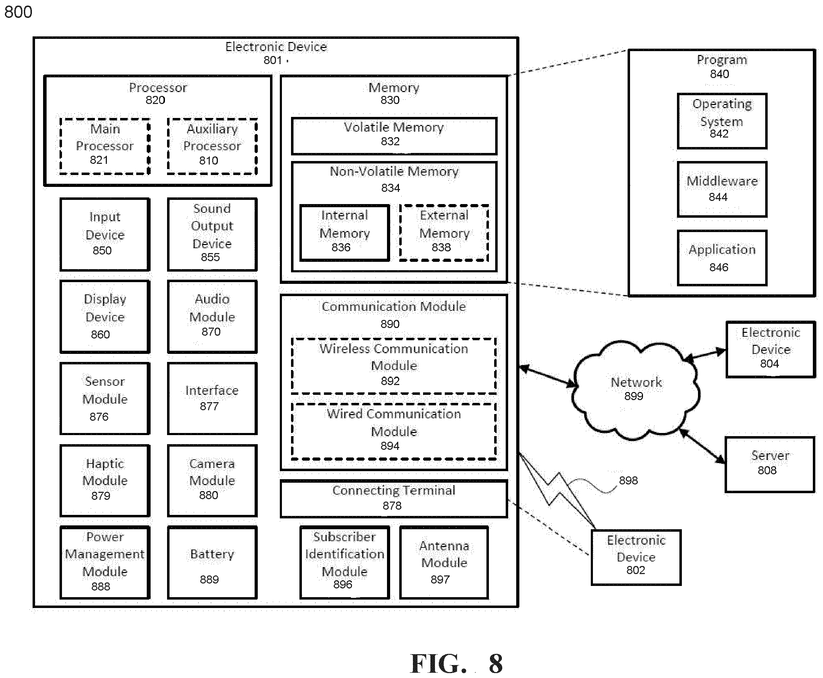

FIG. 8 is a block diagram of an electronic device in a network environment 800, according to an embodiment. Referring to FIG. 8, an electronic device 801 in a network environment 800 may communicate with an electronic device 802 via a first network 898 (e.g., a short-range wireless communication network), or an electronic device 804 or a server 808 via a second network 899 (e.g., a long-range wireless communication network). The electronic device 801 may communicate with the electronic device 804 via the server 808. The electronic device 801 may include a processor 820, a memory 830, an input device 840, a sound output device 855, a display device 860, an audio module 870, a sensor module 876, an interface 877, a haptic module 879, a camera module 880, a power management module 888, a battery 889, a communication module 890, a subscriber identification module (SIM) card 896, or an antenna module 894. In one embodiment, at least one (e.g., the display device 860 or the camera module 880) of the components may be omitted from the electronic device 801, or one or more other components may be added to the electronic device 801. Some of the components may be implemented as a single integrated circuit (IC). For example, the sensor module 876 (e.g., a fingerprint sensor, an iris sensor, or an illuminance sensor) may be embedded in the display device 860 (e.g., a display).

The processor 820 may execute, for example, software (e.g., a program 840) to control at least one other component (e.g., a hardware or a software component) of the electronic device 801 coupled with the processor 820 and may perform various data processing or computations. As at least part of the data processing or computations, the processor 820 may load a command or data received from another component (e.g., the sensor module 846 or the communication module 890) in volatile memory 832, process the command or the data stored in the volatile memory 832, and store resulting data in non-volatile memory 834. The processor 820 may include a main processor 821 (e.g., a central processing unit (CPU) or an application processor (AP)), and an auxiliary processor 823 (e.g., a graphics processing unit (GPU), an image signal processor (ISP), a sensor hub processor, or a communication processor (CP)) that is operable independently from, or in conjunction with, the main processor 821. Additionally or alternatively, the auxiliary processor 823 may be adapted to consume less power than the main processor 821, or execute a particular function. The auxiliary processor 823 may be implemented as being separate from, or a part of, the main processor 821.

The auxiliary processor 823 may control at least some of the functions or states related to at least one component (e.g., the display device 860, the sensor module 876, or the communication module 890) among the components of the electronic device 801, instead of the main processor 821 while the main processor 821 is in an inactive (e.g., sleep) state, or together with the main processor 821 while the main processor 821 is in an active state (e.g., executing an application). The auxiliary processor 823 (e.g., an image signal processor or a communication processor) may be implemented as part of another component (e.g., the camera module 880 or the communication module 890) functionally related to the auxiliary processor 823.

The memory 830 may store various data used by at least one component (e.g., the processor 820 or the sensor module 876) of the electronic device 801. The various data may include, for example, software (e.g., the program 840) and input data or output data for a command related thereto. The memory 830 may include the volatile memory 832 or the non-volatile memory 834.

The program 840 may be stored in the memory 830 as software, and may include, for example, an operating system (OS) 842, middleware 844, or an application 846.

The input device 850 may receive a command or data to be used by another component (e.g., the processor 820) of the electronic device 801, from the outside (e.g., a user) of the electronic device 801. The input device 850 may include, for example, a microphone, a mouse, or a keyboard.

The sound output device 855 may output sound signals to the outside of the electronic device 801. The sound output device 855 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 860 may visually provide information to the outside (e.g., a user) of the electronic device 801. The display device 860 may include, for example, a display, a hologram device, or a projector and control circuitry to control a corresponding one of the display, hologram device, and projector. The display device 860 may include touch circuitry adapted to detect a touch, or sensor circuitry (e.g., a pressure sensor) adapted to measure the intensity of force incurred by the touch.

The audio module 870 may convert a sound into an electrical signal and vice versa. The audio module 870 may obtain the sound via the input device 850 or output the sound via the sound output device 855 or a headphone of an external electronic device 802 directly (e.g., wired) or wirelessly coupled with the electronic device 801.

The sensor module 876 may detect an operational state (e.g., power or temperature) of the electronic device 801 or an environmental state (e.g., a state of a user) external to the electronic device 801, and then generate an electrical signal or data value corresponding to the detected state. The sensor module 876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 877 may support one or more specified protocols to be used for the electronic device 801 to be coupled with the external electronic device 802 directly (e.g., wired) or wirelessly. The interface 877 may include, for example, a high- definition multimedia interface (HDMI), a universal serial bus (USB) interface, a secure digital (SD) card interface, or an audio interface.

A connecting terminal 878 may include a connector via which the electronic device 801 may be physically connected with the external electronic device 802. The connecting terminal 878 may include, for example, an HDMI connector, a USB connector, an SD card connector, or an audio connector (e.g., a headphone connector).

The haptic module 879 may convert an electrical signal into a mechanical stimulus (e.g., a vibration or a movement) or an electrical stimulus which may be recognized by a user via tactile sensation or kinesthetic sensation. The haptic module 879 may include, for example, a motor, a piezoelectric element, or an electrical stimulator.

The camera module 880 may capture a still image or moving images. The camera module 880 may include one or more lenses, image sensors, image signal processors, or flashes.

The power management module 888 may manage power supplied to the electronic device 801. The power management module 888 may be implemented as at least part of, for example, a power management integrated circuit (PMIC).

The battery 889 may supply power to at least one component of the electronic device 801. The battery 889 may include, for example, a primary cell which is not rechargeable, a secondary cell which is rechargeable, or a fuel cell.

The communication module 890 may support establishing a direct (e.g., wired) communication channel or a wireless communication channel between the electronic device 801 and the external electronic device (e.g., the electronic device 802, the electronic device 804, or the server 808) and performing communication via the established communication channel. The communication module 890 may include one or more communication processors that are operable independently from the processor 820 (e.g., the AP) and supports a direct (e.g., wired) communication or a wireless communication. The communication module 890 may include a wireless communication module 892 (e.g., a cellular communication module, a short-range wireless communication module, or a global navigation satellite system (GNSS) communication module) or a wired communication module 894 (e.g., a local area network (LAN) communication module or a power line communication (PLC) module). A corresponding one of these communication modules may communicate with the external electronic device via the first network 898 (e.g., a short-range communication network, such as Bluetooth^{™}, wireless-fidelity (Wi-Fi) direct, or a standard of the Infrared Data Association (IrDA)) or the second network 899 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 892 may identify and authenticate the electronic device 801 in a communication network, such as the first network 898 or the second network 899, using subscriber information (e.g., international mobile subscriber identity (IMSI)) stored in the subscriber identification module 896.

The antenna module 897 may transmit or receive a signal or power to or from the outside (e.g., the external electronic device) of the electronic device 801. The antenna module 897 may include one or more antennas, and, therefrom, at least one antenna appropriate for a communication scheme used in the communication network, such as the first network 898 or the second network 899, may be selected, for example, by the communication module 890 (e.g., the wireless communication module 892). The signal or the power may then be transmitted or received between the communication module 890 and the external electronic device via the selected at least one antenna.

Commands or data may be transmitted or received between the electronic device 801 and the external electronic device 804 via the server 808 coupled with the second network 899. Each of the electronic devices 802 and 804 may be a device of a same type as, or a different type, from the electronic device 801. All or some of operations to be executed at the electronic device 801 may be executed at one or more of the external electronic devices 802, 804, or 808. For example, if the electronic device 801 should perform a function or a service automatically, or in response to a request from a user or another device, the electronic device 801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 801. The electronic device 801 may provide the outcome, with or without further processing of the outcome, as at least part of a reply to the request. To that end, a cloud computing, distributed computing, or client-server computing technology may be used, for example.

While the present disclosure has been described with reference to certain embodiments, various changes may be made without departing from the scope of the disclosure, which is defined, not by the detailed description and embodiments, but by the appended claims.

## Claims

1. A device, comprising:
a host;
a processor;
a memory pooling device electrically connected to the processor; and
a compute express link, CXL, dynamic memory capacity expansion device, DMCED,
wherein the CXL DMCED is directly electrically connected to the memory pooling device.

2. The device of claim 1,
wherein the processor is installed in the host, and
wherein at least one of a memory capacity or a storage capacity in the memory pooling device is configured to be increased and decreased while an active power state of the device is maintained.

3. The device of claim 2,
wherein the memory pooling device and the CXI, DMCED are installed in the host and are electrically connected to the processor by a CXL.

4. The device of claim 2,
wherein the memory pooling device and the CXL DMCED are disposed outside of the host and are electrically connected to the processor by a CXL.

5. The device of claim 2 or 4, further comprising:
a switching fabric, SF, disposed between the host and the memory pooling device and the CXL DMCED.

6. The device of claim 5,
wherein the SF is electrically connected to the host by a first CXL on a first end and is electrically connected to the memory pooling device and the CXL DMCED by a second CXL on a second end opposite to the first end.

7. The device of claim 6, further comprising:
a host-managed device memory, HDM, decoder disposed in the SF,
wherein the HDM decoder is configured to enable the host to access a memory area in the memory pooling device.

8. The device of claim 3,
wherein the processor includes a memory manager and a host CXL agent,
wherein the CXL DMCED includes a target CXL agent, and
wherein the memory pooling device is configured as a memory only device or a memory plus storage device.

9. The device of claim 8,
wherein, when the memory pooling device is configured as the memory only device, the memory capacity is configured to be increased or decreased by a set/get communication between the host CXL agent and the target CXL agent.

10. The device of claim 8,
wherein, when the memory pooling device is configured as the memory plus storage device, the memory capacity and the storage capacity are configured to be increased or decreased by a set/get communication between the host CXL agent and the target CXL agent.

11. The device of any one of claims 8 to 10,
wherein the device is configured to perform a device attach or device detach function between the host CXL agent and the target CXL agent.

12. The device of claim 6 or 7,
wherein the processor includes a memory manager and a host CXL agent,
wherein the CXL DMCED includes a target CXL agent, and
wherein the memory pooling device is configured as a memory only device or a memory plus storage device.

13. The device of claim 12,
wherein, when the memory pooling device is configured as the memory only device, the memory capacity is configured to be increased or decreased by a set/get communication between the host CXL agent and the target CXL agent, the set/get communication being enabled by the SF.

14. The device of claim 12,
wherein, when the memory pooling device is configured as the memory plus storage device, the memory capacity and the storage capacity are configured to be increased or decreased by a set/get communication between the host CXL agent and the target CXL agent, the set/get communication being enabled by the SF.

15. The device of any one of claims 12 to 14,
wherein the device is configured to perform a device attach or device detach function between the host CXL agent and the target CXL agent.
